# EUROPÄISCHE PATENTSCHRIFT

(11) **EP 1 110 648 B1**
(45) Veröffentlichungstag und Bekanntmachung des Hinweises auf die Patenterteilung: **10.07.2002**
(21) Anmeldenummer: 00124175.1
(22) Anmeldetag: 08.11.2000
(51) Int. Cl.: B23B 31/16

(54) **Spannfutter für Werkzeugmaschinen**
Chuck for a machine tool
Mandrin pour une machine outil

(30) Priorität: 24.12.1999 DE 19962993; 05.08.2000 EP 00116929
(43) Veröffentlichungstag der Anmeldung: 27.06.2001
(73) Patentinhaber: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(56) Entgegenhaltungen:
- DE-C- 19 509 976

## Beschreibung

Die Erfindung betrifft ein Spannfutter für Werkzeugmaschinen, insbesondere Drehmaschinen, mit einem mit dem Futterflansch verbundenen Futterkörper, mit mehreren in radialen Führungsnuten des Futterkörpers angeordneten Spannbacken und mit die Spannbacken antreibenden, im Futterkörper in Keilstangentaschen quer zu den Führungsnuten verschiebbaren Keilstangen, die zur Bildung einer Schrägverzahnung mit Zahnreihen in entsprechende Zahnlücken der Spannbacken in Eingriff zu bringen sind (siehe z.B. DE-A- 195 09976).

Derartige aus der Praxis bekannte Spannfutter werden genutzt, um Werkzeuge oder Werkstücke unterschiedlichen Durchmessers einzuspannen. Dabei kann es allerdings zu Problemen kommen, wenn Werkzeuge oder Werkstücke eingespannt werden sollen, die die Grenze des maximal einspannbaren Durchmessers erreichen oder überschreiten und es nicht zu einer ausreichenden Überdeckung der Zahnreihen der Keilstangen mit den Zahnlücken der Spannbacken kommt, die Spannbacken also nicht tief genug in die radialen Führungsnuten eingesetzt sind, so daß im Grenzfall die Spannbacken nur durch einen Zahn gehalten werden, der den Belastungen beim Betrieb der Werkzeugmaschinen nicht sicher gewachsen ist und bei den hohen auftretenden Spannkräften abgeschert werden kann, so daß die betreffende Spannbacke abgeschleudert werden würde. Auch ist bei den vorbekannten Spannfuttern keine Kontrolle möglich, ob überhaupt eine Spannbacke in die Führungsnut eingesetzt ist, wenn die Keilstange in der Keilstangentasche verstellt wird.

Der Erfindung liegt daher die Aufgabe zugrunde, ein Spannfutter der eingangs genannten Art so auszubilden, daß eine einfache Kontrolle möglich ist, ob die Spannbacken ausreichend tief in die radialen Führungsnuten eingesetzt sind.

Diese Aufgabe wird bei einem Spannfutter der eingangs genannten Art dadurch gelöst, daß in der Keilstange in axialer Richtung des Futterkörpers verstellbar ein Kontrollbolzen und ein Sperrbolzen gelagert sind, zu deren gemeinsamer, in entgegengesetzter Richtung erfolgender Verstellung ein Koppelglied vorgesehen ist sowie eine eine Verstellung des Sperrbolzens in Richtung der Führungsnut bewirkende Feder, und daß im Futterflansch eine Rastaufnahme ausgebildet ist, die den Sperrbolzen aufnimmt, wenn der Kontrollbolzen in die Führungsnut eingreift.

Dieses Spannfutter bietet den Vorteil, daß bei einem Spannbackenwechsel bei einer fehlenden oder nicht ausreichend tief genug in die Führungsnut eingesetzten Spannbacke der Kontrollbolzen keine Abstützung durch die Spannbacke erfährt, sich daher infolge der Wirkung der Feder in die Führungsnut vorverstellt und diese sperrt, so daß auch nachfolgend keine Spannbacke eingesetzt werden kann, bevor nicht der Kontrollbolzen wieder aus der Führungsnut entfernt worden ist. Durch die erfindungsgemäße Kopplung des Kontrollbolzens mit dem Sperrbolzen wird dieser in der Keilstange in zu dem Kontrollbolzen entgegengesetzter Richtung verstellt und tritt in die im Futterflansch ausgebildete Rastaufnahme ein, so daß neben der Blockade der Führungsnut durch den Kontrollbolzen das weitere Sicherungselement gegeben ist, daß die Keilstange blockiert ist und in ihrer Keilstangentasche nicht mehr verschoben werden kann.

Eine bevorzugte Ausführungsform der Erfindung ist dadurch gekennzeichnet, daß ein Rückstellglied vorgesehen ist, das bei der Bewegung der Keilstange in die dem Spannbackenwechsel dienende Stellung den Sperrbolzen aus der Rastaufnahme entfernt. Hat die erfindungsgemäße, dem Spannfutter zugeordnete Sicherungseinrichtung angesprochen, ist es nicht mehr möglich, eine Spannbacke einzusetzen und das Spannfutter zu betätigen. Dazu ist zunächst erforderlich, daß die Keilstange wieder in die dem Spannbackenwechsel dienende Stellung verschoben wird, bei der die Zahnreihen nicht in den Bereich der Führungsnuten hineinragen. Um die Keilstange in diese Stellung ohne Behinderung durch den in die Rastaufnahme ragenden Sperrbolzen verschieben zu können, ist das Rückstellglied vorgesehen, das in einfachster Ausführung durch in Bewegungsrichtung des Sperrbolzens liegende Schrägfläche gebildet ist. Durch die erzwungene Bewegung des Sperrbolzens wird wegen der Wirkung des Koppelgliedes auch der Kontrollbolzen wieder aus der Führungsnut entfernt, die damit für die Aufnahme der Spannbacke bereit steht.

Einen weiteren Nutzen erhält das Rückstellglied dadurch, daß das Rückstellglied in einer an der Keilstange ausgebildeten Führungsaufnahme angeordnet ist, eine Anlaufschräge zur Zusammenwirkung mit dem Sperrbolzen aufweist, durch die Kraft einer Feder in Richtung der Wand der Keilstangentasche verstellbar ist, und daß das Rückstellglied, wenn die Keilstange sich in der dem Spannbackenwechsel dienenden Stellung befindet, über die Anlaufschräge den Sperrbolzen abstützt. In der dem Spannbackenwechsel dienenden Stellung der Keilstange ist der Kontrollbolzen nicht durch eine Spannbacke abgestützt, so daß dieser sich axial verstellen könnte und dadurch auch den Sperrbolzen in die Rastaufnahme verstellen würde. Dies wird durch das Rückstellglied vermieden, das in dieser Situation dem Sperrbolzen anliegt und eine Verstellung in axialer Richtung verhindert. Bei einer nachfolgenden Verstellung der Keilstange endet jedoch die Abstützung des Sperrbolzens durch das Rückstellglied, da dieses unter der Kraft der Feder relativ zur Keilstange verschoben wird. Ist eine Spannbacke sachgerecht in die Führungsnut eingesetzt, findet der Kontrollbolzen einen Anschlag und verstellt sich, ebenso wie der Sperrbolzen, nicht. Fehlt jedoch die Spannbacke, findet diese Verstellung statt und der Sperrbolzen kann in die Rastaufnahme eintreten, wobei der Sperrbolzen an dem Rückstellglied erneut zur Anlage kommt, um bei der nachfolgend notwendigen Verstellung der Keilstange in die dem Spannbackenwechsel dienenden Stellung die Rückstellung des Sperrbolzens bewirken zu können.

Um eine Verdrehung des Rückstellgliedes in der Führungsaufnahme zu vermeiden, ist an dem Rückstellglied eine zur Anlage an den Futterflansch kommende Planfläche ausgebildet.

Dabei ist vorgesehen, daß die Planfläche und eine an der dem Sperrbolzen zugeordneten Anlaufschräge zur Anlage kommende Rundfläche an dem stirnseitig an dem Rückstellglied angeordneten Hammerkopf ausgebildet sind, da dies eine in versetzten Ebene erfolgende Plazierung des Rückstellgliedes und des Sperrbolzens ermöglicht und so zu einer kompakten Bauweise führt.

Nach einer weiteren bevorzugten und sich durch ihre kostengünstige Herstellungsweise auszeichnende Ausführungsform ist vorgesehen, daß der Kontrollbolzen und der Sperrbolzen an den freien Enden eines zweiarmigen, um eine parallel zur Führungsnut liegende Achse drehbaren Hebels angeordnet sind.

Alternativ besteht auch die Möglichkeit, daß der Kontrollbolzen und der Sperrbolzen durch zwei Zahnstangen gebildet sind, die auf gegenüberliegenden Seiten eines um eine parallel zur Führungsnut liegende Achse drehbaren Zahnrades kämmen.

Der Einfachheit halber ist dabei die Achse durch einen in eine Gewindebohrung der Keilstange einschraubbaren Gewindestift gebildet.

Ein weiteres Sicherheitsmerkmal, das die Betätigung des Spannfutters bei fehlerhaft eingesetzter Spannbacke verhindert, läßt sich dadurch realisieren, daß an dem Kolben der Werkzeugmaschine ein Keilzahn ausgebildet ist, der in einer an der Keilstange ausgebildete Nut eingreift, die zur Verschiebung der Keilstange in Längsrichtung der Keilstangentasche einen geneigt zur Futterachse verlaufenden ersten Abschnitt und zur Verstellung der Keilstange durch einen Schlüssel zum Wechsel der Spannbacken einen parallel zur Keilstangentaschen verlaufenden zweiten Abschnitt aufweist, und daß der Keilzahn sich bei in die Rastaufnahme im Futterflansch eingerücktem Sperrbolzen zur Verhinderung einer axialen Verstellung des Kolbens in dem zweiten Abschnitt befindet. Da der Kolben sich nicht verstellen läßt und sich somit zwangsweise in der durch Endschalter überwachten, dem Spannbackenwechsel dienenden Stellung befindet, verhindern die Endschalter, daß die Werkzeugmaschine überhaupt anlaufen kann.

Im folgenden wird die Erfindung an einem in der Zeichnung dargestellten Ausführungsbeispiel näher erläutert; es zeigen:

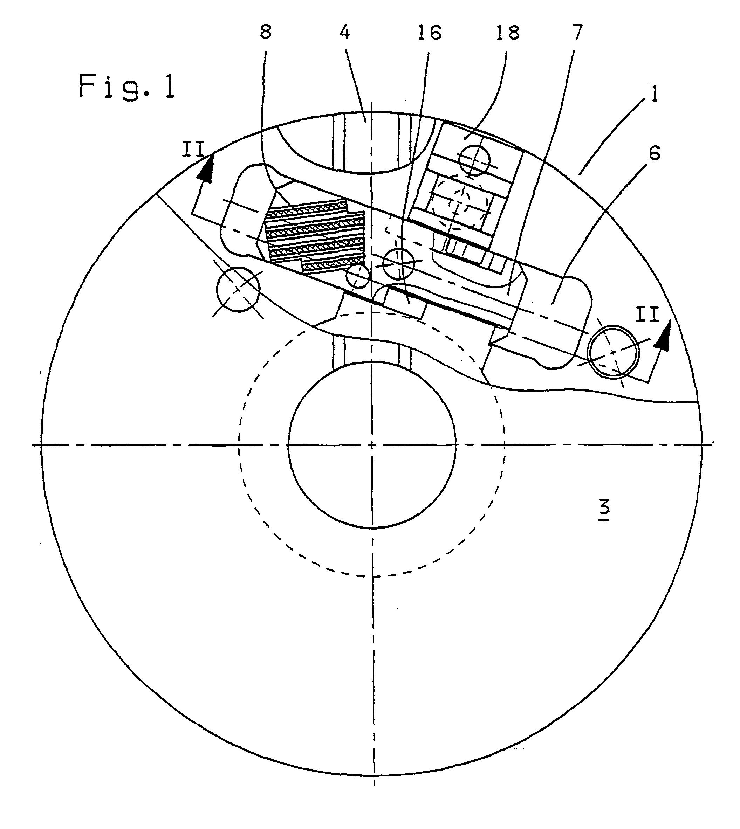

- Fig. 1: eine Stirnansicht des Spannfutters nach der Erfindung, teilweise gebrochen dargestellt,
- Fig. 2: der Schnitt II-II aus Fig. 1 in der dem Spannbackenwechsel dienenden Stellung der Keilstange,
- Fig. 3: eine der Fig. 2 entsprechende Darstellung mit einer Keilstange in einer zum Beginnen der Verriegelung der Spannbacke befindlichen Position,
- Fig. 4: eine der Fig. 2 entsprechende Darstellung mit einem vollständigen Verzahnungseingriff von Spannbacke und Keilstange,
- Fig. 5: eine der Fig. 3 entsprechende Darstellung bei fehlender Spannbacke,
- Fig. 6: der Schnitt VI-VI aus Fig. 4,
- Fig. 7: der Schnitt VII-VII aus Fig. 6,
- Fig. 8: der Schnitt VIII-VIII aus Fig. 6,

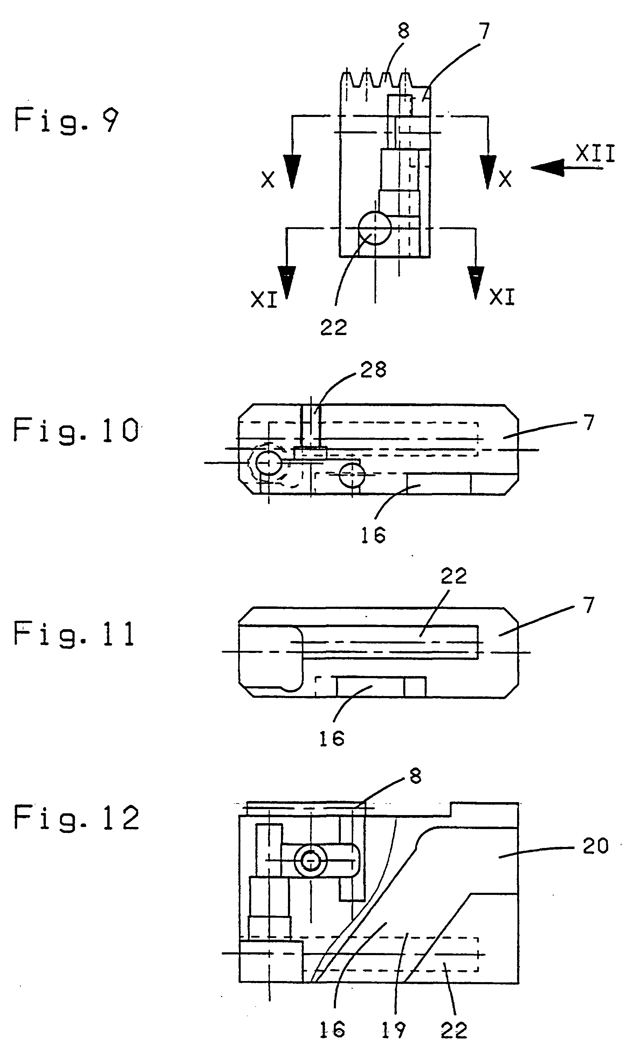

- Fig. 9: eine der Fig. 6 entsprechende Darstellung einer Keilstange,
- Fig. 10: der Schnitt X-X aus Fig. 9,
- Fig. 11: der Schnitt XI-XI aus Fig. 9,
- Fig. 12: eine Ansicht der Keilstange aus Fig. 9 aus Richtung des Pfeiles XII,

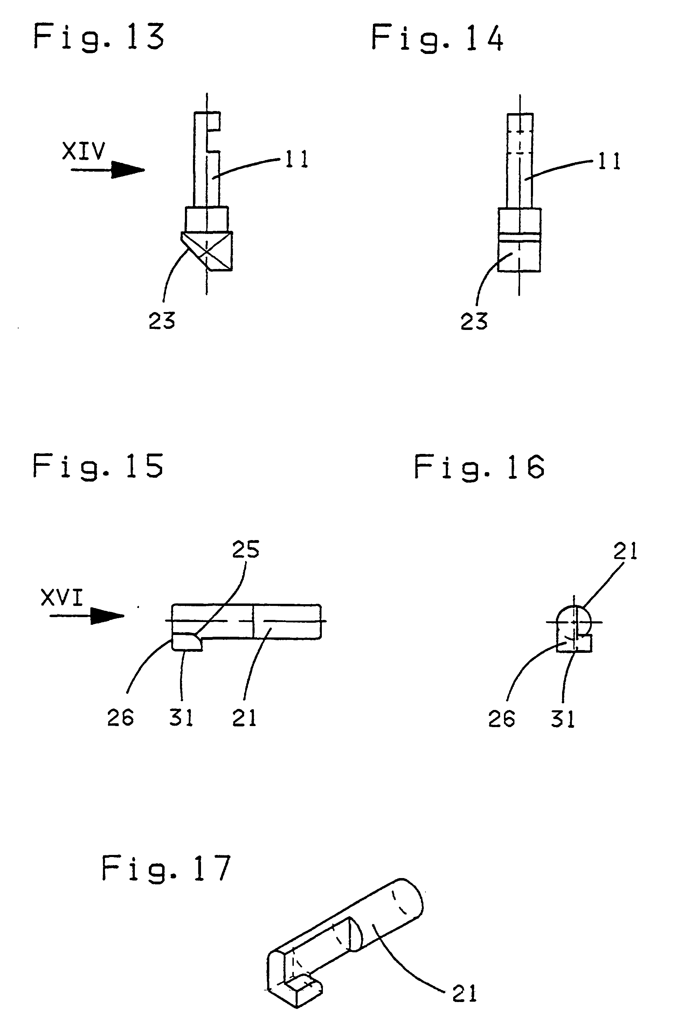

- Fig. 13: eine Draufsicht auf den Sperrbolzen,
- Fig. 14: eine Sicht auf den Sperrbolzen aus Richtung des Pfeiles XIV aus Fig. 13,
- Fig. 15: eine Draufsicht auf das Rückstellglied,
- Fig. 16: eine Sicht aus Richtung des Pfeiles XVI aus Fig. 15, und
- Fig. 17: eine perspektivische Darstellung des Rückstellgliedes.

Das in der Zeichnung dargestellte Spannfutter 1 ist zum Betrieb an einer selber nicht dargestellten Werkzeugmaschine, insbesondere einer Drehmaschine, vorgesehen und wird an dieser über einen Futterflansch 2 an der Maschinenspindel befestigt. Das Spannfutter 1 besitzt einen mit dem Futterflansch 2 verbundenen Futterkörper 3, in dem mehrere, in der Regel drei gleichmäßig über den Umfang verteilt angeordnete, radiale Führungsnuten 4 vorhanden sind, in die Spannbacken 5 eingesetzt werden können. Zur Verstellung der Spannbacken 5 ist für jede Spannbacke 5 im Futterkörper 3 eine in einer Keilstangentasche 6 quer zu der zugeordneten Führungsnut 4 verschiebbare Keilstange 7 vorgesehen, die zur Bildung einer Schrägverzahnung mit Zahnreihen 8 in entsprechende Zahnlücken 9 der Spannbacke 5 in Eingriff zu bringen ist. In der Keilstange 7 ist ein in axialer Richtung des Futterkörpers 3 verstellbarer Kontrollbolzen 10 sowie ein gleichfalls in axialer Richtung des Futterkörpers 3 verstellbare Sperrbolzen 11 gelagert, zu deren gemeinsamer, in entgegengesetzter Richtung erfolgender Verstellung ein Koppelglied 12 vorhanden ist. Weiterhin ist auch eine Feder 13 vorhanden, deren Kraftwirkung zu einer in Richtung der Führungsnut 4 erfolgenden Verstellung des Kontrollbolzens 10 führt, wobei in dem gezeigten Ausführungsbeispiel die Feder 13 dem Sperrbolzen 11 zugeordnet ist und mittelbar über das Koppelglied 12 auf den Kontrollbolzen 10 einwirkt. Im Futterflansch 2 ist eine den Sperrbolzen 11 bei in die Führungsnut 4 eingreifendem Kontrollbolzen 10 aufnehmende Rastaufnahme 14 ausgebildet.

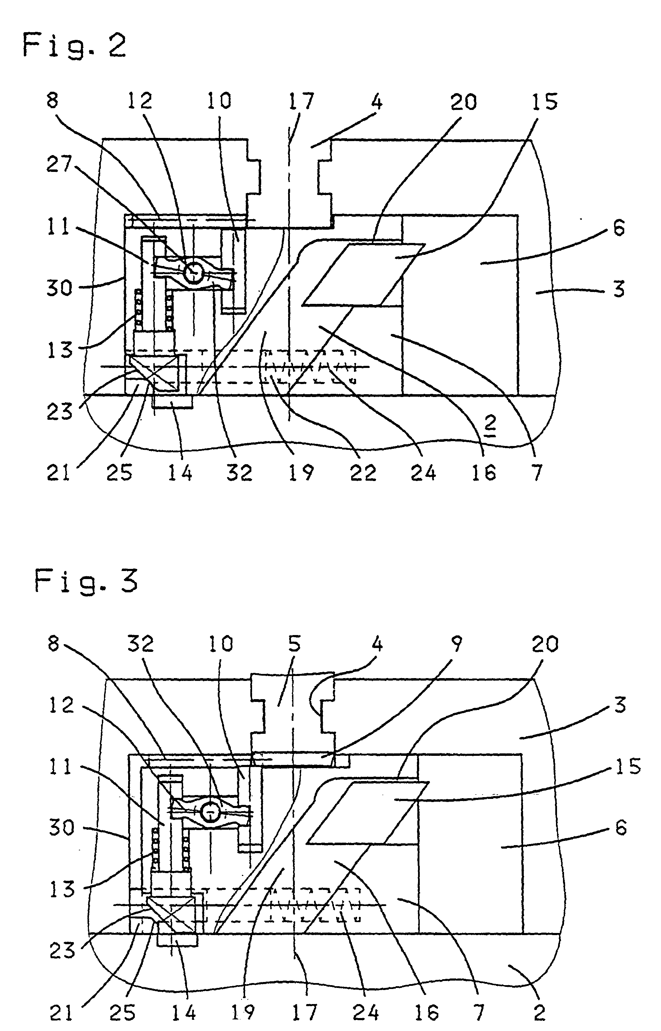

Bei der in Fig. 2 gezeigten Darstellung befindet sich die Keilstange 7 in der dem Spannbackenwechsel dienenden Stellung, in der ein an dem Kolben der Werkzeugmaschine ausgebildeter Keilzahn 15 in eine an der Keilstange 7 ausgebildete Nut 16 eingreift, die zur Verschiebung der Keilstange 7 in Längsrichtung der Keilstangentasche 6 durch den Keilzahn 15 einen geneigt zur Futterachse 17 verlaufenden ersten Abschnitt 19 und zur Verstellung der Keilstange 7 durch einen in eine Schlüsselaufnahme 18 einzusetzenden Schlüssel zum Wechsel der Spannbacken 5 einen parallel zur Keilstangentaschen 6 verlaufenden zweiten Abschnitt 20 aufweist. In Fig. 2 befindet sich der Keilzahn 15 im zweiten Abschnitt 20, so daß durch die Keilstange auch eine axiale Verschiebung des Kolbens verhindert ist und die Werkzeugmaschine durch den die axiale Stellung des Kolbens erfassenden Endschalter gegen ein Anlaufen gesperrt ist. In der in Fig. 2 gezeigten Stellung der Keilstange 7 ist ein Entfernen der Spannbacken 5 möglich, da die Zahnreihen 8 vollständig aus dem Bereich der Führungsnuten 4 verschoben sind.

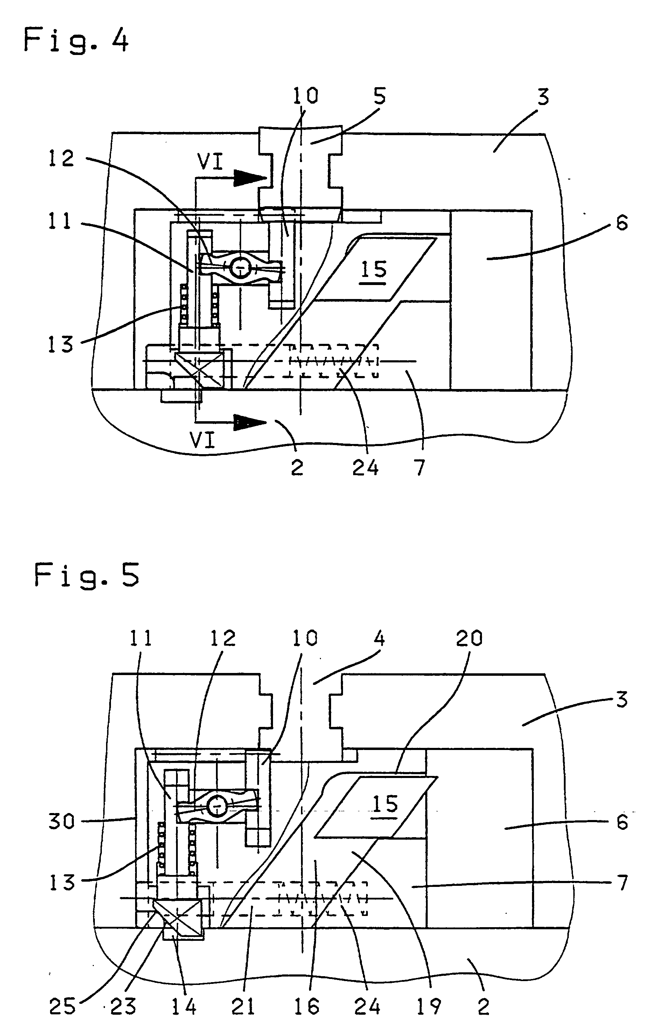

Trotz der fehlenden Abstützung durch die Spannbacke 5 verstellt sich der Kontrollbolzen 10 nicht unter der Wirkung der Feder 13, da der Sperrbolzen 11 an einem Rückstellglied 21 anliegt, das in einer in der Keilstange 7 ausgebildeten Führungsaufnahme 22 angeordnet ist. Das Rückstellglied 21 wirkt mit dem Sperrbolzen 11 über eine Anlaufschräge 23 zusammen, wobei weiterhin eine Feder 24 eine Kraft auf das Rückstellglied 21 ausübt, so daß dieses in der Führungsaufnahme 22 in Richtung der Wand der Keilstangentasche 6 verstellt wird, wie dies beispielsweise aus den Figuren 3 und 4 ersichtlich ist. Dadurch geht der Kontakt des Rückstellgliedes 21 mit dem Sperrbolzen 11 verloren; eine Verstellung des Sperrbolzens 11 und damit des Kontrollbolzens 10 erfolgt aber nicht, da der Kontrollbolzen 10 nahtlos durch die in die Führungsnut 4 des Futterkörpers 3 eingesetzte Spannbacke 5 abgestützt wird.

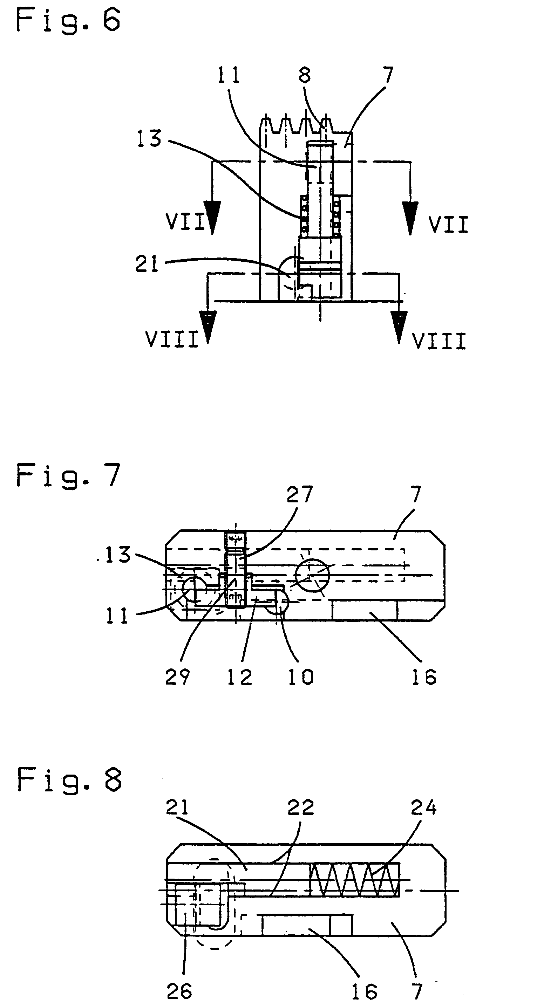

In Fig. 5 fehlt die Spannbacke 5, so daß eine Abstützung des Kontrollbolzens 10 nicht erfolgt und infolge von dessen Verstellung der Sperrbolzen 11 in die Rastaufnahme 14 am Futterflansch 2 eintritt und dabei wieder in Kontakt zu dem Rückstellglied 21 kommt. Bei der in Fig. 5 dargestellten Stellung der Keilstange 7 fällt weiter auf, daß der Keilzahn 15 des Kolbens durch seine Anlage im zweiten Abschnitt 20 der in der Keilstange 7 ausgebildeten Nut 16 eine Verschiebung des Kolbens verhindert. Um die Blockade der Führungsnut 4 durch den Kontrollbolzen 10 wieder beenden zu können, muß die Keilstange 7 erneut in die dem Spannbackenwechsel dienende Stellung, in den Figuren 2 bis 5 nach links, verschoben werden. Um diese erforderliche Verschiebung durch den in die Rastaufnahme 14 hineinragenden Sperrbolzen 11 nicht zu behindern, wird das Rückstellglied 21 genutzt, um über die Anlaufschräge 23 den Sperrbolzen 11 wieder aus der Rastaufnahme 14 zu verstellen.

Um eine Verdrehung des Rückstellgliedes 21 in der Führungsaufnahme 22 zu verhindern, ist an dem Rückstellglied 21 eine zur Anlage an den Futterflansch 2 kommende Planfläche 31 ausgebildet, wobei die Planfläche 31 und eine an der dem Sperrbolzen 11 zugeordneten Anlaufschräge 23 zur Anlage kommende Rundfläche 25 an einem stirnseitig an dem Rückstellglied 21 angeordneten Hammerkopf 26 ausgebildet sind.

Bei dem in der Zeichnung dargestellten Ausführungsbeispiel sind der Kontrollbolzen 10 und der Sperrbolzen 11 an den freien Enden eines zweiarmigen, um eine parallel zur Führungsnut 4 liegende Achse 27 drehbaren Hebels 32 angeordnet, wobei die Achse 27 durch einen in eine Gewindebohrung 28 der Keilstange 7 eingeschraubten Gewindestift 29 gebildet ist. Nach einer nicht gezeigten Ausführungsform ist es alternativ gleichfalls möglich, daß der Kontrollbolzen 10 und der Sperrbolzen 11 durch zwei Zahnstangen gebildet sind, die auf gegenüberliegenden Seiten eines um eine parallel zur Führungsnut 4 liegende Achse 27 drehbaren Zahnrades kämmen.

## Patentansprüche

1. Spannfutter für Werkzeugmaschinen, insbesondere Drehmaschinen, mit einem mit dem Futterflansch (2) verbundenen Futterkörper (3), mit mehreren in radialen Führungsnuten (4) des Futterkörpers (3) angeordneten Spannbacken (5) und mit die Spannbacken (5) antreibenden, im Futterkörper (3) in Keilstangentaschen (6) quer zu den Führungsnuten (4) verschiebbaren Keilstangen (7), die zur Bildung einer Schrägverzahnung mit Zahnreihen (8) in entsprechende Zahnlücken (9) der Spannbacken (5) in Eingriff zu bringen sind, **dadurch gekennzeichnet, daß** in der Keilstange (7) in axialer Richtung des Futterkörpers (3) verstellbar ein Kontrollbolzen (10) und ein Sperrbolzen (11) gelagert sind, zu deren gemeinsamer, in entgegengesetzter Richtung erfolgender Verstellung ein Koppelglied (12) vorgesehen ist sowie eine eine Verstellung des Kontrollbolzens (10) in Richtung der Führungsnut (4) bewirkende Feder, und daß im Futterflansch (2) eine Rastaufnahme (14) ausgebildet ist, die den Sperrbolzen (11) aufnimmt, wenn der Kontrollbolzen (10) in die Führungsnut (4) eingreift.

2. Spannfutter nach Anspruch 1, **dadurch gekennzeichnet, daß** ein Rückstellglied (21) vorgesehen ist, das bei der Bewegung der Keilstange (7) in die dem Spannbackenwechsel dienenden Stellung den Sperrbolzen (11) aus der Rastaufnahme (14) entfernt.

3. Spannfutter nach Anspruch 2, **dadurch gekennzeichnet, daß** das Rückstellglied (21) in einer in der Keilstange (7) ausgebildeten Führungsaufnahme (22) angeordnet ist, eine Anlaufschräge zur Zusammenwirkung mit dem Sperrbolzen (11) aufweist, durch die Kraft einer Feder (24) in Richtung der Wand (30) der Keilstangentasche (6) verstellbar ist, und daß das Rückstellglied (21), wenn die Keilstange (7) sich in der dem Spannbackenwechsel dienenden Stellung befindet, über die Anlaufschräge (23) den Sperrbolzen (11) abstützt.

4. Spannfutter nach Anspruch 3, **dadurch gekennzeichnet, daß** an dem Rückstellglied (21) eine zur Anlage an den Futterflansch (2) kommende Planfläche (31) ausgebildet ist.

5. Spannfutter nach Anspruch 4, **dadurch gekennzeichnet, daß** die Planfläche (31) und eine an der dem Sperrbolzen (11) zugeordneten Anlaufschräge (23) zur Anlage kommende Rundfläche (25) an einem stirnseitig an dem Rückstellglied (21) angeordneten Hammerkopf (26) ausgebildet sind.

6. Spannfutter nach einem der Ansprüche 1 bis 5, **dadurch gekennzeichnet, daß** der Kontrollbolzen (10) und der Sperrbolzen (11) an den freien Enden eines zweiarmigen, um eine parallel zur Führungsnut (4) liegende Achse (27) drehbaren Hebels (32) angeordnet sind.

7. Spannfutter nach einem der Ansprüche 1 bis 6, **dadurch gekennzeichnet, daß** der Kontrollbolzen (10) und der Sperrbolzen (11) durch zwei Zahnstangen gebildet sind, die auf gegenüberliegenden Seiten eines um eine parallel zur Führungsnut (4) liegende Achse (27) drehbaren Zahnrades kämmen.

8. Spannfutter nach Anspruch 6 oder 7, **dadurch gekennzeichnet, daß** die Achse (27) durch einen in eine Gewindebohrung der Keilstange (7) einschraubbaren Gewindestift (29) gebildet ist.

9. Spannfutter nach einem der Ansprüche 1 bis 8, **dadurch gekennzeichnet, daß** an dem Kolben der Werkzeugmaschine ein Keilzahn (15) ausgebildet ist, der in eine an der Keilstange (7) ausgebildete Nut (16) eingreift, die zur Verschiebung der Keilstange (7) in Längsrichtung der Keilstangentasche (6) einen geneigt zur Futterachse (17) verlaufenden ersten Abschnitt (19) und zur Verstellung der Keilstange (7) durch einen Schlüssel zum Wechsel der Spannbacken (5) einen parallel zur Keilstangentasche (6) verlaufenden zweiten Abschnitt (20) aufweist, und daß der Keilzahn (15) sich bei in die Rastaufnahme (14) im Futterflansch (2) eingerücktem Sperrbolzen (11) zur Verhinderung einer axialen Verstellung des Kolbens in dem zweiten Abschnitt (20) befindet.

## Claims

1. Clamping chuck for machine tools, in particular lathes, with a chuck body (3) connected to the lathe chuck flange (2), with several clamping jaws (5) arranged in radial guide grooves (4) of the chuck body (3), and with wedge-type rods (7) which drive the clamping jaws (5), and can be pushed in the chuck body (3), in wedge-type rod sleeves, crosswise to the guide grooves (4), and which in order to form oblique toothing are to be engaged, with toothing rows (8), into corresponding tooth gaps (9) of the clamping jaws (5),
**characterised in that**
borne in the wedge-type rod (7), in such a way as to be adjustable in the axial direction of the chuck body (3), are a check bolt (10) and a locking pin (11), and for their mutual adjustment, which takes place in opposite directions, a coupling element (12) is provided, as well as a spring which effects a displacement of the check bolt (10) in the direction of the guide groove (4);
and that formed in the lathe chuck flange (2) is a catch receiver (14) which receives the locking pin (11) when the check bolt (10) engages into the guide groove (4).

2. Clamping chuck in accordance with claim 1, **characterised in that** a reset element (21) is provided which, when the wedge-type rod (7) is moved into the position for changing clamping jaws, removes the locking pin (11) from out of the catch receiver (14)..

3. Clamping chuck in accordance with claim 2, **characterised in that** the reset element (21) is arranged in a guide receiver (22) formed in the wedge-type rod (7); has an approach slope for interaction with the locking pin (11); can be displaced through the force of a spring (24) in the direction of the wall (30) of the wedge-type rod sleeve (6); and that when the wedge-type rod (7) is located in the position for changing clamping jaws, the reset element (21) supports the locking pin (11) via the approach slope (23).

4. Clamping chuck in accordance with claim 3, **characterised in that** formed on the reset element (21) is a end face (31) which comes to rest on the lathe chuck flange (2).

5. Clamping chuck in accordance with claim 4, **characterised in that** the end face (31), and a rounded surface (25) which comes to rest on the approach slope (23) assigned to the locking pin (11), are formed on a hammer head (26) which is arranged frontally on the reset element (21).

6. Clamping chuck in accordance with one of the claims 1 to 5, **characterised in that** the check bolt (10) and the locking pin (11) are arranged on the free ends of a two-armed lever (32) which can be rotated around an axis (27) lying parallel to the guide groove (4).

7. Clamping chuck in accordance with one of the claims 1 to 6, **characterised in that** the check bolt (10) and the locking pin (11) are formed by two toothed racks which mesh on opposite sides of a toothed wheel which can be rotated around an axis (27) lying parallel to the guide groove (4).

8. Clamping chucking in accordance with claim 6 or 7, **characterised in that** the axis (27) is formed by a set screw (29) which can be screwed into a threaded drilled hole of the wedge-type rod (7).

9. Clamping chuck in accordance with one of the claims 1 to 8, **characterised in that** formed on the piston of the machine tool is a wedge-type tooth (15) which engages into a groove (16) formed on the wedge-type rod (7), and for the purpose of displacing the wedge-type rod (7) in the longitudinal direction of the wedge-type rod sleeve (6) this [groove] has a first section (19) which runs at an incline to the chuck axis (17), and for the purpose of displacing the wedge-type rod (7) by means of a key for changing the clamping jaws (5) it [the groove] has a second section (20) which runs parallel to the wedge-type rod sleeve; and that when the locking pin (11) is engaged into the catch receiver (14) in the lathe chuck flange (2) to prevent axial displacement of the piston, the wedge-type tooth (15) is located in the second section (20).

## Revendications

1. Mandrin de serrage pour machines-outils, en particulier pour tours d'usinage, avec un corps de mandrin (3) qui est lié au plateau de mandrin (2), avec plusieurs mors de serrage (5) qui sont disposés dans des rainures de guidage (4) radiales du corps de mandrin (3) et avec des coulisseaux de bridage (7) qui entraînent les mors de serrage (5), coulissent dans le corps de mandrin (3), dans des logements (6) de coulisseaux, transversalement aux rainures de guidage (4) et qui, pour former un engrenage incliné peuvent être amenés en prise avec des rangées de dents (8) dans des espaces entre-dents (9) correspondants des mors de serage (5), **caractérisé en ce qu'**un poussoir de commande (10) et un poussoir de verrouillage (11) sont montés dans le coulisseau de bridage (7) avec possibilité de déplacement dans la direction axiale du corps de mandrin (3), poussoirs pour le déplacement simultané, dans des directions opposées, desquels il est prévu un élément de couplage (12) et un ressort qui provoque un déplacement du poussoir de commande (10) en direction de la rainure de guidage (4), et **en ce qu'**un logement d'encliquetage (14) est aménagé dans le plateau de mandrin (2), pour recevoir le poussoir de verrouillage (11) lorsque le poussoir de commande (10) pénètre dans la rainure de guidage (4).

2. Mandrin de serrage selon la revendication 1, **caractérisé en ce qu'**il est prévu un élément de déverrouillage (21) qui, lors du déplacement du coulisseau de bridage (7) dans la position pour le changemrnt des mors, éloigne le poussoir de verrouillage (11) du logement d'encliquetage (14).

3. Mandrin de serrage selon la revendication 2, **caractérisé en ce que** l'élément de déverrouillage (21) est disposé dans un logement de guidage (22) aménagé dans le coulisseau de bridage (7), présente une surface de contact inclinée qui coopère avec le poussoir de verrouillage (11) et peut être déplacé par la force d'un ressort (24) en direction de la paroi (30) du logement (6) de coulisseau de bridage et **en ce que** l'élément de déverrouillage (21), lorsque le coulisseau de bridage (7) se trouve dans la position de changement de mors, retient le poussoir de verrouillage (11) par l'intermédiaire de la surface de contact inclinée (23).

4. Mandrin de serrage selon la revendication 3, **caractérisé en ce qu'**une surface plane (31) qui vient en contact avec le plateau de mandrin (2) est aménagée sur l'élément de déverrouillage (21).

5. Mandrin de serrage selon la revendication 4, **caractérisé en ce que** la surface plane (31) et une surface arrondie (25) venant en appui sur la surface de contact inclinée (23) associée au poussoir de verrouillage (11) sont aménagées sur une tête de marteau (26) prévue côté face frontale sur l'élément de déverrouillage (21).

6. Mandrin de serrage selon une des revendications 1 à 5, **caractérisé en ce que** le poussoir de commande (10) et le poussoir de verrouillage (11) sont disposés aux extrémités libres d'un levier (32) monté tournant autour d'un axe (27) parallèle à la rainure de guidage (4).

7. Mandrin de serrage selon une des revendications 1 à 6, **caractérisé en ce que** le poussoir de commande (10) et le poussoir de verrouillage (11) sont formés par deux crémaillères qui engrènent avec des côté en vis-à-vis d'une roue dentée tournant autour d'un axe (27) parallèle à la rainure de guidage (4).

8. Mandrin de serrage selon la revendication 6 ou 7, **caractérisé en ce que** l'axe (27) est formé par une vis sans tête (29) vissée dans un trou fileté du coulisseau de bridage (7).

9. Mandrin de serrage selon une des revendications 1 à 8, **caractérisé en ce que** sur le piston de la machine-outil est aménagée une dent (15) qui pénètre dans une rainure (16) aménagée dans le coulisseau de bridage (7), laquelle rainure présente, pour le déplacement du coulisseau de bridage (7) dans la direction longitudinale du logement de coulisseau (6), une première portion (19) inclinée par rapport à l'axe (17) du mandrin et, pour le déplacement du coulisseau de bridage (7) à l'aide d'une clé, pour le changement des mors de serrage (5), une deuxième portion (20) parallèle au logement de coulisseau (6), et **en ce que** la dent (15), lorsque le poussoir de verrouillage (11) est engagé dans le logement d'encliquetage (14) dans le plateau de mandrin (2), se trouve dans la deuxième portion (20) pour empêcher un déplacement axial du piston.
